# EUROPÄISCHE PATENTANMELDUNG

(11) **EP 2 728 735 A2**
(43) Veröffentlichungstag der Anmeldung: **07.05.2014**
(21) Anmeldenummer: 13191500.1
(22) Anmeldetag: 05.11.2013
(51) Int. Cl.: H02M 7/49, H02J 7/34

(54) **Modulares Traktionsumrichtersystem mit Energiespeicher zum Bereitstellen einer Zwischenkreisspannung und Verfahren zu dessen Betrieb**

(30) Priorität: 05.11.2012 DE 102012220118
(71) Anmelder: Bombardier Transportation GmbH, 10785 Berlin (DE)
(72) Erfinder: Lindenmüller, Lars, 01127 Dresden (DE); Stettler, Stefan, 02708 Löbau (DE)
(74) Vertreter: Ramrath, Lukas

(57) **Zusammenfassung**

Die Erfindung betrifft eine Schaltungsanordnung zur Einstellung eines Ladezustands eines Kondensators, insbesondere eines Zwischenkreiskondensator (C_{ZK}) eines elektrisch antreibbaren Fahrzeugs, wobei die Schaltungsanordnung den Kondensator, einen Energiespeicher (63) und eine Stromrichterschaltung umfasst, wobei die Stromrichterschaltung derart ausgebildet ist, dass ein bidirektionalen Energiefluss zwischen dem Zwischenkreiskondensator und der Speichereinrichtung ermöglicht wird wobei die Schaltungsanordnung eine Anschlusseinrichtung für einen Hilfskreis umfasst, wobei der Kondensator und die Speichereinrichtung über die Stromrichterschaltung mit der Anschlusseinrichtung elektrisch verbunden sind, wobei die Stromrichterschaltung derart ausgebildet ist, dass elektrische Energie vom Zwischenkreiskondensator zur Anschlusseinrichtung und/oder elektrische Energie von der Speichereinrichtung zur Anschlusseinrichtung transportierbar ist, sowie Verfahren zum Betreiben einer solchen Schaltungsanordnung.

## Beschreibung

Die Erfindung betrifft eine Schaltungsanordnung sowie Verfahren zum Betreiben der Schaltungsanordnung. Insbesondere betrifft die Erfindung eine Schaltungsanordnung zur Einstellung eines Ladezustandes eines Kondensators, der ein Zwischenkreiskondensator eines elektrisch antreibbaren Fahrzeugs, insbesondere eines Schienenfahrzeugs, sein kann.

Für die Versorgung von Antriebseinrichtungen von Schienenfahrzeugen werden je nach Land oder Region elektrische Versorgungsnetze in unterschiedlicher Weise betrieben. Realisiert ist z.B. in Deutschland eine elektrische Versorgung mit Wechselspannung bei einer Frequenz von 16,7 Hz und einer Nennspannung von 15 kV. Ein anderes System wird bei Wechselspannung mit 50 Hz und einer Nennspannung von 25 kV betrieben. Auch existieren Gleichspannungssysteme, insbesondere bei 3 kV und 1,5 kV Nennspannung.

Für einen Betrieb an Wechselspannungs-Versorgungsnetzen ist es üblich, die vergleichsweise hohe Wechselspannung des Versorgungsnetzes zunächst über einen Eingangstransformator des Schienenfahrzeugs auf einen niedrigeren Wechselspannungswert herunterzutransformieren, die transformierte Wechselspannung gleichzurichten und in einen so genannten Gleichspannungs-Zwischenkreis einzuspeisen, an dem ein Traktionswechselrichter für den Betrieb eines Traktionsmotors oder mehrerer Traktionsmotoren angeschlossen ist. Nachteilig an dieser Lösung ist aber die Größe und das Gewicht des Eingangstransformators, insbesondere bei Frequenzen von 16,7 Hz, jedoch auch noch bei Frequenzen von 50 Hz.

Die DE 10 2010 044 322 A1 offenbart eine elektrische Energieversorgungsanordnung für Antriebseinrichtungen von Schienenfahrzeugen, wobei die Energieversorgungsanordnung einen ersten elektrischen Anschluss zum Anschließen der Anordnung an ein elektrisches Energieversorgungsnetz, einen zweiten elektrischen Anschluss zum Anschließen der Anordnung an einen Gleichspannungszwischenkreis, an den wiederum zumindest ein Traktionswechselrichter zum Betreiben zumindest eines Fahrmotors anschließbar ist, und eine Gleichrichteranordnung umfasst. Die Gleichrichteranordnung dient zum Betrieb des Schienenfahrzeugs an einem Wechselspannungsnetz, wobei die Gleichrichteranordnung über einen ersten Filter mit dem ersten elektrischen Anschluss verbunden ist und zumindest ein Modul aufweist, in dem ein erster Gleichrichter über einen Wechselrichter und ein Transformator mit einem zweiten Gleichrichter verbunden ist, wobei der erste Gleichrichter an seiner Wechselspannungsseite über den ersten Filter mit dem ersten elektrischen Anschluss verbunden ist, wobei der zweite Gleichrichter an seiner Gleichspannungsseite mit dem zweiten elektrischen Anschluss verbunden ist und wobei im Fall von mehreren der Module die Wechselspannungsanschlüsse der ersten Gleichrichter in Serie geschaltet sind, aber die Gleichspannungsanschlüsse der zweiten Gleichrichter parallel geschaltet sind. Weiter umfasst die Energieversorgungsanordnung eine elektrische Verbindung zum Betrieb des Schienenfahrzeugs an einem Gleichspannungsnetz, wobei die elektrische Verbindung einen zweiten Filter aufweist und wobei die elektrische Verbindung den ersten elektrischen Anschluss mit dem zweiten elektrischen Anschluss verbindet. Weiter umfasst die Energieversorgungsanordnung eine Steuereinrichtung zum Steuern des Betriebes des ersten Gleichrichters oder der ersten Gleichrichter, während das Schienenfahrzeug an einem Gleichspannungsnetz betrieben wird, wobei die Steuereinrichtung ausgestaltet ist, durch Steuern von Schaltzeitpunkten von Halbleiterschaltern des ersten Gleichrichters oder der ersten Gleichrichter an dem ersten elektrischen Anschluss eine Wechselspannung zu erzeugen, die einen elektrischen Wechselstrom, der ein Störstrom ist, der aufgrund des Betriebes der Antriebseinrichtung des Schienenfahrzeugs von dem Gleichspannungszwischenkreis durch die elektrische Verbindung fließt, kompensiert oder auf ein zulässiges Maß reduziert.

Die DE 10 2010 039 640 A1 offenbart einen Traktionsstromrichter mit einer netzseitigen Einspeisevorrichtung, einen lastseitigen selbstgeführten Pulsstromrichter und einen Hilfsbetriebe-Stromrichter, wobei diese Einspeisevorrichtung eingangsseitig eine Vielzahl elektrisch in Reihe geschalteter primärer Stromrichter-Gruppen aufweist, die mittels einer Mittelfrequenz-Transformator-Einrichtung mit wenigstens einem Ausgangs-Stromrichter verknüpft sind, dessen gleichspannungsseitige Anschlüsse mit gleichspannungsseitigen Anschlüssen des lastseitigen selbstgeführten Pulsstromrichters elektrisch leitend verbunden sind. Hierbei ist der Hilfsbetriebe-Stromrichter mit einer Einrichtung zur Auskopplung einer Hilfsbetriebeleistung aus der Mittelfrequenz-Transformatoreinrichtung verknüpft.

Die in den Druckschriften beschriebene so genannte Mittelfrequenz-Topologie kann nicht ohne Weiteres an ein Traktionsnetz elektrisch angeschlossen werden. Es ist insbesondere notwendig, eine so genannte Vorladeschaltung vorzusehen, durch die der Zwischenkreiskondensator vor einem Anschluss an ein Traktionsnetz aufgeladen werden kann.

So beschreibt die DE 198 27 872 B4 eine Antriebsschaltung für ein Schienenfahrzeug mit mehreren, zwischen einem Fahrdraht/Stromabnehmer-System und einem Rad/Schiene-System über mindestens eine Drossel in Reihe geschalteten ersten Teilstromrichtersystemen, wobei jedes erste Teilstromrichtersystem aus mindestens einem primärseitigen Vierquadrantensteller, einem primärseitigen Gleichspannungszwischenkreis, mindestens einem primärseitigen Wechselrichter, mindestens einem Transformator und mindestens einem sekundärseitigen Vierquadrantensteller besteht. Weiter bilden sekundärseitig parallel geschaltete zweite Teilstromrichtersysteme einen gemeinsamen sekundärseitigen Gleichspannungszwischenkreis. Der sekundärseitige Gleichspannungszwischenkreis ist mit einer Anlaufschaltung verbunden. Weiter erfolgt die Speisung der primärseitigen Leittechnik inklusive der Ansteuereinrichtungen sowie Halbleiterschalter des primärseitigen Vierquadrantenstellers über die jeweiligen primärseitigen Gleichspannungszwischenkreise oder aus den Wechselspannungen der jeweiligen primärseitigen Wechselrichter oder aus den primärseitigen Wechselspannungen der jeweiligen Transformatoren.

Weiter kann es erforderlich sein, dass in einem Schienenfahrzeug eine Hilfsspannung benötigt wird, die zur elektrischen Versorgung von Verbrauchern, beispielsweise Lüftern, dient. Diese Hilfsspannung kann z.B. über einen Hilfsbetriebe-Stromrichter aus dem Zwischenkreis heraus bereitgestellt werden. Dies ist z.B. in der vorhergehend erwähnten DE 10 2010 039 640 A1 offenbart.

Es stellt sich das technische Problem, eine Schaltungsanordnung und Verfahren zum Betreiben der Schaltungsanordnung zu schaffen, mittels derer ein Ladezustand eines Kondensators, insbesondere eines Zwischenkreiskondensators einen Traktionsnetzes eines elektrisch antreibbaren Fahrzeugs, einstellbar ist, wobei ein Gewicht von Bauelementen der Schaltungsanordnung, ein erforderlicher Bauraum und eine Anzahl von verwendeten Bauelementen minimiert wird.

Die Lösung des technischen Problems ergibt sich durch die Gegenstände mit den Merkmalen der Ansprüche 1, 7, 8 und 9. Weitere vorteilhafte Ausgestaltungen der Erfindung ergeben sich aus den Unteransprüchen.

Vorgeschlagen wird eine Schaltungsanordnung zur Einstellung eines Ladezustandes eines Kondensators. Der Kondensator kann insbesondere ein Zwischenkreiskondensator eines Traktionsnetzes eines elektrisch antreibbaren Fahrzeugs, insbesondere eines elektrisch antreibbaren Schienenfahrzeuges, sein.

Das Traktionsnetz kann hierbei einen ersten elektrischen Anschluss zum Anschließen des Traktionsnetzes an ein elektrisches Energieversorgungsnetz, welches insbesondere ein Gleichspannungsnetz sein kann, aufweisen. Weiter kann das Traktionsnetz eine Anzahl elektrisch in Reihe geschalteter primärer Stromrichter-Gruppen aufweisen, die mittels einer oder mehrerer Mittelfrequenz-Transformator-Einrichtung(en) mit einem oder mehreren Ausgangs-Stromrichter(en) verknüpft sind, dessen gleichspannungsseitige Anschlüsse mit gleichspannungsseitigen Anschlüssen eines Zwischenkreiskondensators elektrisch leitend verbunden sind. Somit kann das Traktionsnetz entsprechend einer so genannten Mittelfrequenz-Topologie aufgebaut sein oder eine entsprechend der Mittelfrequenz-Topologie aufgebaute Schaltungsanordnung umfassen. An den Zwischenkreiskondensator kann ein Motorstromrichter oder Traktionswechselrichter angeschlossen sein, der einen gewünschten Strom/Spannungsverlauf zum Betrieb einer elektrischen Maschine erzeugt, wobei die elektrische Maschine das Fahrzeug antreibt.

Es ist eine Grundidee der Erfindung, den Zwischenkreiskondensator über einen einzigen Stromrichter, der z.B. als galvanisch getrennter Stromrichter ausgebildet ist, sowohl mit einer Speichereinrichtung für elektrische Energie, beispielsweise einer Batterie oder einem Akkumulator, als auch mit einem Anschluss für eine Schaltungsanordnung zur Erzeugung einer Hilfskreisspannung zu verbinden, wobei durch den Stromrichter ein bidirektionaler Energiefluss zwischen dem Zwischenkreiskondensator und der Speichereinrichtung und jeweils zumindest ein unidirektionaler Energiefluss vom Zwischenkreiskondensator zum Hilfskreis bzw. von der Speichereinrichtung zum Hilfskreis ermöglicht wird.

Die vorgeschlagene Schaltungsanordnung umfasst einen Zwischenkreiskondensator und einen Energiespeicher und eine Stromrichterschaltung. Der Zwischenkreiskondensator ist über eine Stromrichterschaltung mit der Speichereinrichtung elektrisch verbunden, wobei die Stromrichterschaltung einen bidirektionalen Energiefluss zwischen dem Zwischenkreiskondensator und der Speichereinrichtung ermöglicht. Somit kann elektrische Energie aus dem Zwischenkreiskondensator in die Speichereinrichtung transportiert oder elektrische Energie aus der Speichereinrichtung in den Zwischenkreiskondensator transportiert werden.

Weiter umfasst die Schaltungsanordnung eine Anschlusseinrichtung für einen Hilfskreis des Fahrzeugs. Die Anschlusseinrichtung stellt hierbei eine gewünschte Hilfskreisspannung zur elektrischen Versorgung von an den Hilfskreis angeschlossenen Verbrauchern, z.B. Lüftern, bereit oder zur Verfügung.

Der Zwischenkreiskondensator und die Speichereinrichtung sind über die Stromrichterschaltung mit der Anschlusseinrichtung elektrisch verbunden, wobei die Stromrichterschaltung derart ausgebildet ist, dass elektrische Energie vom Zwischenkreiskondensator zur Anschlusseinrichtung und/oder elektrische Energie von der Speichereinrichtung zur Anschlusseinrichtung transportiert werden kann. Hierbei kann die Stromrichterschaltung derart ausgebildet ist, dass elektrische Energie auch oder nicht von der Anschlusseinrichtung zum Zwischenkreiskondensator und/oder elektrische Energie auch oder nicht von der Anschlusseinrichtung zur Speichereinrichtung transportiert werden kann.

Ein Stromrichter bezeichnet hierbei eine Schaltungsanordnung, die sowohl als Gleichrichter als auch als Wechselrichter betrieben werden kann.

Durch die Verwendung eines einzigen Stromrichters, der die Übertragung von elektrischer Energie mit den vorhergehend erläuterten Energieflussrichtungen ermöglicht, ergibt sich in vorteilhafter Weise eine Verringerung des erforderlichen Bauraums für ein Traktionsnetz und der benötigten elektrischen Bauelemente. Hierdurch wiederum ergibt sich in vorteilhafter Weise eine Kostenreduktion bei der Bereitstellung der vorhergehend erläuterten Energieübertragungsrichtungen.

Weiter umfasst die Schaltungsanordnung den Zwischenkreiskondensator, einen zwischenkreisseitigen Stromrichter und einen Transformator. Eine Gleichspannungsseite des zwischenkreisseitigen Stromrichters ist mit dem Zwischenkreiskondensator und eine Wechselspannungsseite des zwischenkreisseitigen Stromrichters ist mit einer primärseitigen Spule des Transformators elektrisch verbunden. Weiter umfasst die Schaltungsanordnung die hilfskreisseitige Anschlusseinrichtung. Diese kann vorzugsweise einen hilfskreisseitigen Wechselrichter und einen hilfskreisseitigen Gleichrichter umfassen.

Die hilfskreisseitige Anschlusseinrichtung, insbesondere eine Wechselspannungsseite des hilfskreisseitigen Gleichrichters, ist mit einer sekundärseitigen Spule des Transformators verbunden.

Weiter ist hilfskreisseitig mindestens ein kapazitives Element angeordnet. Insbesondere kann das mindestens eine kapazitive Element ein Element des hilfskreisseitigen Gleichrichters sein. Eine Kapazität des kapazitiven Elements ist in Abhängigkeit der Streuinduktivitäten, insbesondere der Streuinduktivität zwischen der primärseitigen Spule und der weiteren sekundärseitigen Spule, derart gewählt, dass ein Nullspannungs- und/oder Nullstromschalten von Schaltelementen des zwischenkreisseitigen Stromrichters durchführbar ist. Bei einer Energieübertragung aus dem Zwischenkreis zum Hilfskreis wird sich ein Strom/Spannungsverlauf über/an Schaltelementen des zwischenkreisseitigen Stromrichters in Abhängigkeit der hilfskreisseitigen Kapazität einstellen, die entsprechend des Übersetzungsverhältnisses auf die Zwischenkreisseite transformiert wird. Diese (transformierte) hilfskreisseitige Kapazität ist hierbei derart zu wählen, dass ein Schaltvorgang der Schaltelemente erfolgen kann, wenn ein Strom, der durch die Schaltelemente fließt, null ist und/oder eine Spannung, die über dem Schaltelement abfällt, null ist. Hierdurch ergibt sich in vorteilhafter Weise ein quasi verlustloses Schalten der Schaltelemente und somit ein hoher Wirkungsgrad der vorgeschlagenen Schaltungsanordnung.

In einer weiteren Ausführungsform umfasst die Schaltungsanordnung den Energiespeicher und einen speicherseitigen Stromrichter. Weiter ist eine Gleichspannungsseite des speicherseitigen Stromrichters mit der Speichereinrichtung und eine Wechselspannungsseite des speicherseitigen Stromrichters mit einer ersten sekundärseitigen Spule des Transformators elektrisch verbunden. Die hilfskreisseitige Anschlusseinrichtung, insbesondere eine Wechselspannungsseite des hilfskreisseitigen Gleichrichters, ist mit einer weiteren sekundärseitigen Spule des Transformators verbunden. Eine Gleichspannungsseite des hilfskreisseitigen Gleichrichters kann mit einer Gleichspannungsseite des hilfskreisseitigen Wechselrichters verbunden sein, wobei an eine Wechselspannungsseite des hilfskreisseitigen Wechselrichters der Hilfskreis anschließbar ist.

Die vorgeschlagene Schaltungsanordnung umfasst somit einen Transformator mit einer primärseitigen Spule und zumindest zwei sekundärseitigen Spulen.

Ein Gleichrichter bezeichnet eine Schaltungsanordnung, die ausschließlich als Gleichrichter betrieben werden kann. Entsprechend bezeichnet ein Wechselrichter eine Schaltungsanordnung, die ausschließlich als Wechselrichter betrieben werden kann.

Der hilfskreisseitige Gleichrichter und der hilfskreisseitige Wechselrichter dienen zur Erzeugung einer gewünschten Hilfsspannung zur elektrischen Versorgung von z.B. elektrischen Verbrauchern des Schienenfahrzeugs, beispielsweise Lüftern. Eine Nennspannung, eine Frequenz und/oder weitere Parameter der Hilfsspannung sind hierbei von den entsprechenden Parametern der Betriebs- oder Versorgungsspannung des Fahrzeugs verschieden, wobei die Betriebs- oder Versorgungsspannung die Nennspannung eines externen Versorgungsnetzes oder die zum Betrieb der elektrischen Maschine erforderliche Spannung bezeichnet.

Der zwischenkreisseitige Stromrichter, der Transformator, der speicherseitige Stromrichter sowie zumindest ein Teil der Anschlusseinrichtung, z.B. also der hilfskreisseitige Gleich- und Wechselrichter, bilden einen Stromrichter mit Potentialtrennung aus, welcher elektrische Energie vom Zwischenkreiskondensator zur Speichereinrichtung und/oder zum Hilfskreis transportieren kann. Ebenfalls kann mittels der vorgeschlagenen Schaltungsanordnung elektrische Energie von der Speichereinrichtung zum Zwischenkreiskondensator und/oder zum Hilfskreis transportiert werden. Auch kann mittels der Schaltungsanordnung elektrische Energie vom Hilfskreis zum Zwischenkreiskondensator und/oder zur Speichereinrichtung transportiert werden.

Durch die Verwendung eines einzigen Transformators in der vorgeschlagenen Schaltungsanordnung ergibt sich in vorteilhafter Weise eine Verringerung des erforderlichen Bauraums und der benötigten elektrischen Bauelemente. Hierdurch wiederum ergibt sich in vorteilhafter Weise eine Kostenreduktion bei der Realisierung der vorhergehend erläuterten Energieübertragungsrichtungen.

In einer weiteren Ausführungsform ist/sind der zwischenkreisseitige Stromrichter und/oder der speicherseitige Stromrichter ein aktiver Stromrichter. Hierbei bezeichnet ein aktiver Stromrichter einen Stromrichter, der aktiv steuerbare Schaltelemente umfasst. Aktiv steuerbare Schaltelemente benötigen hierbei externe elektrische Energie beim Schalten der Schaltelemente. Z.B. können die aktiven Schaltelemente als Leistungshalbleiterbauelemente, z.B. als MOSFET oder IGBT, ausgebildet sein.

Hierdurch ergibt sich in vorteilhafter Weise, dass ein gewünschter Strom/Spannungsverlauf an der primärseitigen Spule bzw. an der ersten sekundärseitigen Spule eingestellt werden kann, wodurch eine Steuerung des vorhergehend beschriebenen Energieflusses verbessert wird.

Umfasst die hilfskreisseitige Anschlusseinrichtung einen hilfskreisseitigen Gleichrichter, so kann dieser hilfskreisseitige Gleichrichter ein passiver Gleichrichter sein. In der Regel ist es nicht notwendig, elektrische Energie aus dem Hilfskreis in den Zwischenkreis bzw. zur Speichereinrichtung zu transportieren. Ein passiver Gleichrichter beschreibt hierbei einen Gleichrichter, der ausschließlich passive elektrische Bauelemente umfasst. Passive elektrische Bauelemente benötigen hierbei keine externe elektrische Energie zum Gleichrichten eines Stromes/einer Spannung. Somit ergibt sich in vorteilhafter Weise eine einfache und kostengünstige Ausbildung des hilfskreisseitigen Gleichrichters.

In einer weiteren Ausführungsform ist eine Streuinduktivität zwischen der primärseitigen Spule und der ersten sekundärseitigen Spule größer als eine Streuinduktivität zwischen der primärseitigen Spule und der weiteren sekundärseitigen Spule. Insbesondere kann die Streuinduktivität zwischen der primärseitigen Spule und der weiteren sekundärseitigen Spule, also der dem Hilfskreis zugeordneten Spule, klein gewählt werden.

Hierdurch ergibt sich in vorteilhafter Weise eine höhere magnetische Kopplung zwischen dem Zwischenkreis und dem Hilfskreis als zwischen dem Zwischenkreis und der Speichereinrichtung.

In einer weiteren Ausführungsform ist ein Übersetzungsverhältnis zwischen der primärseitigen Spule und der ersten sekundärseitigen Spule derart gewählt, dass eine transformierte maximale Zwischenkreisspannung kleiner ist als eine maximal zulässige Betriebs- oder Ladespannung der Speichereinrichtung. Die transformierte maximale Zwischenkreisspannung bezeichnet hierbei eine Spannung, die an Anschlüssen der ersten sekundärseitigen Spule bzw. an gleichspannungsseitigen Anschlüssen des speicherseitigen Stromrichters anliegt, wenn die vorgeschlagene Schaltungsanordnung derart betrieben wird, dass elektrische Energie vom Zwischenkreis zur Speichereinrichtung transportiert wird.

Hierdurch ergibt sich in vorteilhafter Weise, dass das Überschreiten einer maximal zulässigen Betriebs- oder Ladespannung der Speichereinrichtung durch die physikalische Ausgestaltung des Transformators verhindert wird. Hierdurch sind keine aufwändige Steueralgorithmen zur Absicherung der Speichereinrichtung erforderlich.

In einer weiteren Ausführungsform ist ein Übersetzungsverhältnis zwischen der primärseitigen Spule und der weiteren sekundärseitigen Spule entsprechend einem Verhältnis einer maximalen Zwischenkreisspannung zu einer gewünschten Betriebsspannung der hilfskreisseitigen Anschlusseinrichtung gewählt. Hierdurch kann in vorteilhafter Weise die an Anschlüssen der weiteren sekundärseitigen Spule bzw. an gleichspannungsseitigen Anschlüssen des hilfskreisseitigen Gleichrichters abfallende Spannung, die sich während einer Energieübertragung aus dem Zwischenkreis zum Hilfskreis einstellt, an die Betriebsspannung der hilfskreisseitigen Anschlusseinrichtung angepasst werden. Somit sind aufwändige Steueralgorithmen zur Einstellung der gewünschten Betriebsspannung des Anschlusseinrichtung nicht erforderlich.

Selbstverständlich kann auch ein Übersetzungsverhältnis zwischen der ersten und der weiteren sekundärseitigen Spule entsprechend einem Verhältnis einer maximalen Betriebsspannung der Speichereinrichtung zur gewünschten Betriebsspannung der hilfskreisseitigen Anschlusseinrichtung gewählt werden.

Weiter vorgeschlagen werden verschiedene Verfahren zum Betreiben einer der vorhergehend erläuterten Schaltungsanordnungen. Die nachfolgend beschriebenen Verfahren können hierbei alternativ ausgeführt werden.

In einem ersten Verfahren zum Betreiben der Schaltungsanordnung wird der speicherseitige Stromrichter als Wechselrichter und der zwischenkreisseitige Stromrichter als Gleichrichter betrieben. Hierbei kann elektrische Energie von der Speichereinrichtung zum Zwischenkreiskondensator transportiert werden. Dieser kann somit aufgeladen werden. Hierdurch kann der Zwischenkreiskondensator in vorteilhafter Weise aus der Speichereinrichtung heraus aufgeladen, insbesondere vorgeladen, werden. Hierdurch ist es nicht mehr notwendig, aufwändige weitere Schaltungsanordnungen zum Vorladen des Zwischenkreiskondensators, z.B. aus dem Traktionsnetz, vorzusehen.

Alternativ kann der speicherseitige Stromrichter als Gleichrichter und der zwischenkreisseitige Stromrichter als Wechselrichter betrieben werden. Hierbei kann elektrische Energie aus dem Zwischenkreiskondensator in die Speichereinrichtung transportiert werden. Diese kann also aus dem Zwischenkreiskondensator geladen werden.

Die beiden vorhergehend beschriebenen Verfahren beschreiben somit Verfahren zur Einstellung einer Energieflussrichtung zwischen dem Zwischenkreiskondensator und der Speichereinrichtung.

Weiter vorgeschlagen wird ein zweites Verfahren zum Betreiben einer der vorhergehend beschriebenen Schaltungsanordnungen, wobei der zwischenkreisseitige Stromrichter als Wechselrichter betrieben wird und der speicherseitige Stromrichter sperrend geschaltet ist. Hierbei kann elektrische Energie aus dem Zwischenkreiskondensator ausschließlich zum Hilfskreis transportiert werden.

Wie vorhergehend erläutert, kann der speicherseitige Stromrichter alternativ als Gleichrichter betrieben werden. Dann kann gleichzeitig elektrische Energie aus dem Zwischenkreis zum Hilfskreis und zur Speichereinrichtung transportiert werden.

Dies ermöglicht in vorteilhafter Weise eine Einstellung des Energieflusses aus dem Zwischenkreis.

Weiter vorgeschlagen wird ein drittes Verfahren zum Betreiben einer der vorhergehend erläuterten Schaltungsanordnungen, wobei der speicherseitige Stromrichter als Wechselrichter betrieben wird und der zwischenkreisseitige Stromrichter sperrend geschaltet ist. Wird der zwischenkreisseitige Stromrichter sperrend geschaltet, so wird elektrische Energie aus der Speichereinrichtung ausschließlich zum Hilfskreis transportiert. Wird der zwischenkreisseitige Stromrichter gleichzeitig als Gleichrichter betrieben, so wird elektrische Energie von der Speichereinrichtung sowohl zum Zwischenkreiskondensator als auch zum Hilfskreis transportiert.

Hierdurch ergibt sich in vorteilhafter Weise eine Einstellung des Energieflusses aus der Speichereinrichtung.

Die Erfindung wird anhand eines Ausführungsbeispiels näher erläutert. Die Fig. zeigen:
- Fig. 1: ein schematisches Schaltbild eines Traktionsnetzes eines Schienenfahrzeugs,
- Fig. 2: eine erfindungsgemäße Schaltungsanordnung und einen Energiefluss in einer ersten Betriebsart,
- Fig. 3: die erfindungsgemäße Schaltungsanordnung aus Fig. 2 in einer zweiten Betriebsart und
- Fig. 4: die in Fig. 2 dargestellte Schaltungsanordnung in einer dritten Betriebsart.

Nachfolgend bezeichnen gleiche Bezugszeichen Elemente mit gleichen oder ähnlichen technischen Merkmalen.

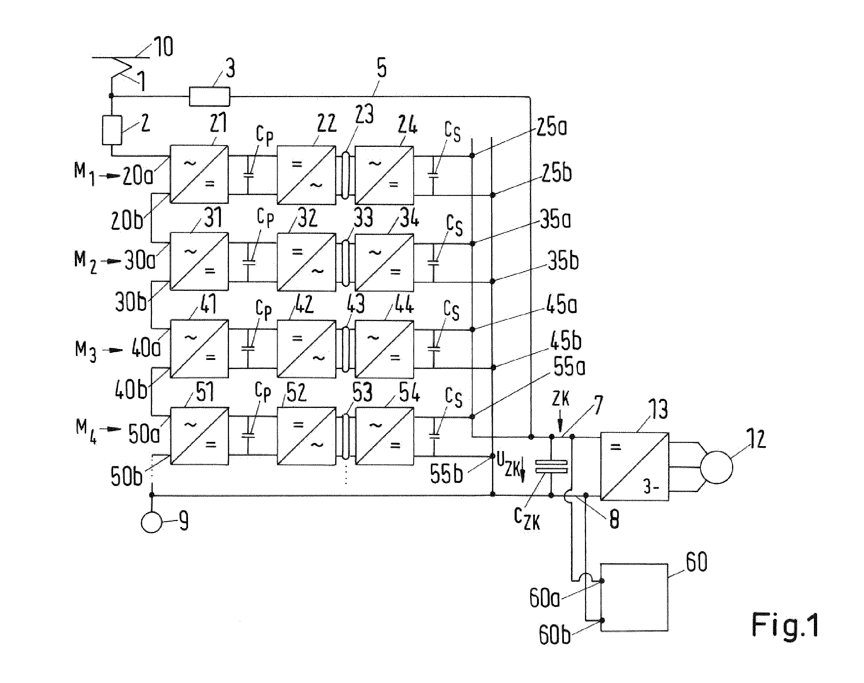

In Fig. 1 ist ein schematisches Schaltbild eines Traktionsnetzes eines nicht dargestellten Schienenfahrzeugs dargestellt. Das Traktionsnetz ist über einen Stromabnehmer 1 an ein elektrisches Energieversorgungsnetz 10 angeschlossen. Hierbei kann das Energieversorgungsnetz ein Wechselspannungsnetz oder ein Gleichspannungsnetz sein. Für den Betrieb an einem Gleichspannungsnetz ist der Stromabnehmer 1 über eine Induktivität 3 und eine elektrische Verbindung 5 mit einem ersten Potential 7 eines Gleichspannungszwischenkreises ZK verbunden. Das andere Potential 8 des Gleichspannungszwischenkreises ZK ist über zumindest ein Rad 9 des Schienenfahrzeugs mit der in Fig. 1 nicht dargestellten Fahrschiene elektrisch verbunden. Zwischen die Potentiale 7, 8 des Gleichspannungszwischenkreises ZK ist ein Zwischenkreiskondensator C_{ZK} geschaltet. Dieser dient als temporärer Energiespeicher und zur Glättung von Spannungsschwankungen.

An den Gleichspannungszwischenkreis ZK ist ein Motorwechselrichter 13 angeschlossen, der die Gleichspannung umrichtet und einen Fahrmotor 12 mit elektrischer Energie versorgt. Alternativ können mehrere Motorwechselrichter an denselben Gleichspannungszwischenkreis angeschlossen sein und/oder ein Motorwechselrichter mehr als einen Fahrmotor mit Energie versorgen.

Für den Betrieb an einem Wechselspannungsnetz ist der Stromabnehmer 1 über eine Filter-Induktivität 2 mit einem ersten elektrischen Anschluss 20a eines ersten Moduls M1 verbunden. Über einen zweiten elektrischen Anschluss 20b ist das erste Modul M1 mit einem ersten elektrischen Anschluss 30a eines zweiten Moduls M2 verbunden. Ein zweiter elektrischer Anschluss 30b des zweiten Moduls M2 ist mit einem ersten elektrischen Anschluss 40a eines dritten Moduls M3 verbunden. Ein zweiter elektrischer Anschluss 40b des dritten Moduls M3 ist mit einem ersten elektrischen Anschluss 50a eines vierten Moduls M4 verbunden. Ein zweiter elektrischer Anschluss 50b ist über weitere, nicht in Fig. 1 dargestellte Module und über zumindest das Rad 9 mit der Fahrschiene verbunden. In verschiedenen Ausführungsformen einer solchen Schaltungsanordnung kann die Anzahl der Module M variieren. Ferner können in derselben Schaltungsanordnung Module bei Bedarf hinzu oder abgeschaltet werden. Ein abgeschaltetes Modul ist nicht mehr Teil der Reihenschaltung von dem Stromabnehmer, der Induktivität 2, jeweils der ersten elektrischen Anschlüsse 20a, 30a, 40a, 50a sowie der zweiten elektrischen Anschlüsse 20b, 30b, 40b, 50b der Module M und das Rad 9 zur Fahrschiene. Ein zugeschaltetes Modul ist jedoch Teil dieser Reihenschaltung. Jedes Modul weist einen ersten Gleichrichter 21, 31, 41, 51 auf, der mit dem ersten elektrischen Anschluss 20a, 30a, 40a, 50a und mit dem zweiten elektrischen Anschluss 20b, 30b, 40b, 50b verbunden ist. Hierbei bezeichnet die Differenz zwischen der Ziffer der Zehnerpotenz des Bezugszeichens eines Bauelements und Eins das jeweilige Modul, dem das Bauelement zugeordnet ist. Somit ist also der erste Gleichrichter 21 Bestandteil des (2-1)ten Moduls, also des ersten Moduls.

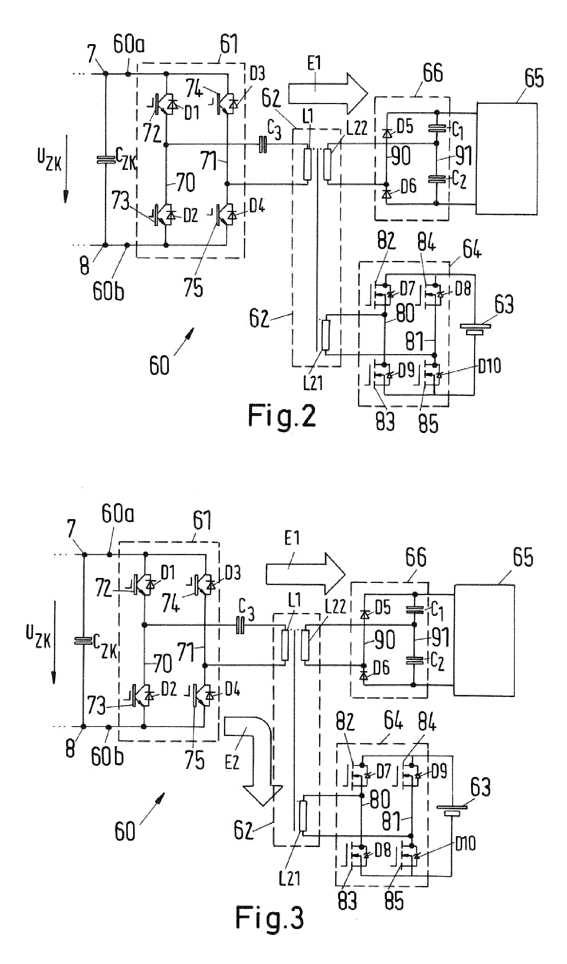

An den Gleichspannungsseiten der ersten Gleichrichter 21, 31, 41, 51 befinden sich jeweils zwei Gleichspannungsleitungen auf unterschiedlichem Potenzial, zwischen denen eine Kapazität C_{P} geschaltet ist und an die die Gleichspannungsseite eines Wechselrichters 22, 32, 42, 52 angeschlossen ist. Die Wechselspannungsseiten der Wechselrichter 22, 32, 42, 52 sind jeweils über einen Transformator 23, 33, 43, 53 mit einer Wechselspannungsseite eines zweiten Gleichrichters 24, 34, 44, 54 verbunden. Die Gleichspannungsseite der zweiten Gleichrichter 24, 34, 44, 54 sind jeweils über Gleichspannungsleitungen mit einem dritten elektrischen Anschluss 25a, 35a, 45a, 55a sowie mit einem vierten elektrischen Anschluss 25b, 35b, 45b, 55b des jeweiligen Moduls M1, M2, M3, M4 verbunden. Zwischen diese Gleichspannungsleitungen ist jeweils eine Kapazität C_{S} geschaltet. Die dritten elektrischen Anschlüsse 25a, 35a, 45a, 55a der Module M1, M2, M3, M4 sind unmittelbar mit dem ersten Potential 7 des Gleichspannungszwischenkreises ZK verbunden. Die vierten elektrischen Anschlüsse 25b, 35b, 45b, 55b sind unmittelbar mit dem zweiten elektrischen Potential 8 des Gleichspannungszwischenkreises ZK verbunden. Zwischen den Potentialen 7, 8 des Gleichspannungszwischenkreises ZK besteht die elektrische Zwischenkreisspannung U_{ZK}. An die das Potential 7, 8 des Gleichspannungszwischenkreises ZK aufweisende Leitungen ist eine erfindungsgemäße Schaltungsanordnung 60 angeschlossen. Hierbei ist dargestellt, dass ein erster Anschluss 60a der Schaltungsanordnung 60 mit dem ersten elektrischen Potential 7 des Gleichspannungszwischenkreises ZK und ein zweiter Anschluss 60b der Schaltungsanordnung 60 mit dem zweiten Potential 8 des Gleichspannungszwischenkreises ZK verbunden ist. Die Schaltungsanordnung 60 ist in Fig. 2 bis Fig. 4 detailliert dargestellt.

In Fig. 2 ist ein schematisches Schaltbild einer erfindungsgemäßen Schaltungsanordnung 60 mit einem Energiefluss in einer ersten Energieflussrichtung E1 in einer ersten Betriebsweise der Schaltungsanordnung 60 dargestellt. Die Schaltungsanordnung 60 umfasst den in Fig. 1 dargestellten Zwischenkreiskondensator C_{ZK}, einen zwischenkreisseitigen Stromrichter 61, einen Transformator 62, einen als Batterie ausgebildeten Energiespeicher 63 und einen speicherseitigen Stromrichter 64. Weiter umfasst die Schaltungsanordnung 60 einen hilfskreisseitigen Wechselrichter 65 und einen hilfskreisseitigen Gleichrichter 66. An den hilfskreisseitigen Wechselrichter 65 ist ein nicht dargestellter Hilfskreis des Schienenfahrzeugs angeschlossen. Ein erster Anschluss 60a der Schaltungsanordnung 60 ist mit einem ersten Potenzial 7 des in Fig. 1 dargestellten Zwischenkreises ZK elektrisch verbunden. Ein zweiter Anschluss 60b ist mit einem zweiten Potenzial 8 des Zwischenkreises ZK verbunden. Die zwischen den Anschlüssen 60a, 60b abfallende Spannung, also die Zwischenkreisspannung U_{ZK}, liegt somit an einer Gleichspannungsseite des zwischenkreisseitigen Stromrichters 61 an.

Der zwischenkreisseitige Stromrichter 61 umfasst zwei Schaltungszweige 70, 71, wobei der erste Schaltungszweig 70 aus einer Reihenschaltung eines ersten Schaltelements 72 und eines zweiten Schaltelements 73 des ersten Schaltungszweigs 70 besteht. Der zweite Schaltungszweig 71 besteht aus einer Reihenschaltung eines ersten Schaltelements 74 und eines zweiten Schaltelements 75 des zweiten Schaltungszweigs 71. Durch Pfeile sind Durchlassrichtungen der Schaltelemente 72, 73, 74, 75 dargestellt. Antiparallel zu jedem der Schaltelemente 72, 73, 74, 75 sind Freilaufdioden D1, D2, D3, D4 geschaltet. Ein erster Anschluss des ersten Schaltelements 72 des ersten Schaltungszweiges 70 ist mit dem ersten Potential 7 des Zwischenkreises ZK verbunden. Ein zweiter Anschlusspunkt des ersten Schaltelements 72 ist mit einem ersten Anschlusspunkt des zweiten Schaltelements 73 des ersten Schaltungszweiges 70 verbunden. Ein zweiter Anschluss des zweiten Schaltelements 73 des ersten Schaltungszweigs 70 ist mit dem zweiten Potenzial 8 des Zwischenkreises ZK verbunden. Entsprechend ist ein erster Anschlusspunkt des ersten Schaltelements 74 des zweiten Schaltungszweigs 71 mit dem ersten Potenzial 7 des Zwischenkreises ZK verbunden. Ein zweiter Anschluss des ersten Schaltelements 74 ist mit einem ersten Anschluss des zweiten Schaltelements 75 des zweiten Schaltungszweigs 71 verbunden, wobei ein zweiter Anschluss des zweiten Schaltelements 75 des zweiten Schaltungszweigs 71 mit dem zweiten Potential 8 des Zwischenkreises ZK verbunden ist. Zwischen Verbindungspunkten der ersten und zweiten Schaltelemente 72, 73, 74, 75 eines jeden Schaltungszweigs 70, 71 ist ein Verbindungszweig angeordnet, der aus einer Reihenschaltung aus einem zwischenkreisseitigen Kondensator C₃ und einer primärseitigen Spule L1 des Transformators 62 besteht.

Der Transformator 62 umfasst neben der primärseitigen Spule L1 eine erste sekundärseitige Spule L21 und eine zweite sekundärseitige Spule L22. Die erste sekundärseitige Spule L21 und die zweite sekundärseitige Spule L22 sind magnetisch mit der primärseitigen Spule L1 koppelbar. Die erste sekundärseitige Spule L21 ist in einem Verbindungszweig zwischen Verbindungspunkten von ersten und zweiten Schaltelementen 82, 83, 84, 85 von jeweils einem ersten Schaltungszweig 80 und einem zweiten Schaltungszweig 81 des speicherseitigen Stromrichters 64 angeordnet. Der speicherseitige Stromrichter 64 umfasst hierbei den ersten Schaltungszweig 80, der aus einer Reihenschaltung des ersten Schaltelements 82 und des zweiten Schaltelements 83 besteht. Parallel zum ersten Schaltungszweig 80 ist der zweite Schaltungszweig 81 geschaltet, der aus einer Reihenschaltung eines ersten Schaltelements 84 und des zweiten Schaltelements 85 des zweiten Schaltungszweigs 81 besteht. Ein erster Anschluss des ersten Schaltelements 82 des ersten Schaltungszweigs 80 und ein erster Anschluss des ersten Schaltelements 84 des zweiten Schaltungszweigs 81 sind miteinander und mit einem ersten Anschluss des Energiespeichers 63 verbunden. Zweite Anschlüsse der ersten Schaltelemente 82, 84 sind jeweils mit ersten Anschlüssen der zweiten Schaltelemente 83, 85 der entsprechenden Schaltungszweige 80, 81 verbunden. Zweite Anschlüsse der Schaltelemente 83, 85 der Schaltungszweige 80, 81 sind miteinander und mit einem zweiten Anschluss des Energiespeichers 63 verbunden. Die Schaltelemente 82, 83, 84, 85 weisen hierbei jeweils eine Vorzugsrichtung auf, wobei den Schaltelementen 82, 83, 84, 85 jeweils Dioden D7, D8, D9, D10 antiparallel geschaltet sind.

Die zweite sekundärseitige Spule L22 ist in einem Verbindungszweig des hilfskreisseitigen Gleichrichters 66 angeordnet. Der hilfskreisseitige Gleichrichter 66 umfasst einen ersten Schaltungszweig 90, der aus einer Reihenschaltung einer ersten Diode D5 und einer zweiten Diode D6 besteht. Ein zweiter Schaltungszweig 91 des hilfskreisseitigen Gleichrichters 66 besteht aus einer Reihenschaltung eines ersten Kondensators C₁ und eines zweiten Kondensators C₂ des hilfskreisseitigen Gleichrichters 66. Ein kathodenseitiger Anschluss der ersten Diode D5 des ersten Schaltungszweigs 90 und ein erster Anschluss des ersten Kondensators C₁ des zweiten Schaltungszweigs 91 sind miteinander und mit einem ersten Anschluss des hilfskreisseitigen Wechselrichters 65 verbunden. Ein anodenseitiger Anschluss der ersten Diode D5 ist mit einem kathodenseitigen Anschluss der zweiten Diode D6 elektrisch verbunden. Ein zweiter Anschluss des ersten Kondensators C₁ ist mit einem ersten Anschluss des zweiten Kondensators C₂ elektrisch verbunden. Ein anodenseitiger Anschluss der zweiten Diode D6 des ersten Schaltungszweigs 90 und ein zweiter Anschluss des zweiten Kondensators C₂ des zweiten Schaltungszweigs 91 sind elektrisch miteinander und mit einem zweiten Anschluss des hilfskreisseitigen Wechselrichters 65 verbunden.

In Fig. 2 ist eine erste Energieflussrichtung E1 vom Zwischenkreis ZK zum hilfskreisseitigen Wechselrichter 65 dargestellt. Hierbei kann Energie entsprechend einer hohen Leistung transportiert werden, typischerweise mehrere 100 kW. Hierbei wird der zwischenkreisseitige Stromrichter 61 entsprechend einer bekannten Steuerung eines ungeregelten Serienresonanzkonverters gesteuert, insbesondere die Schaltelemente 72, 73, 74, 75 des zwischenkreisseitigen Stromrichters 61. Nicht dargestellte Streuinduktivitäten des Transformators 62 sind hierbei in Abhängigkeit von Kapazitäten des ersten und des zweiten Kondensators C₁, C₂ des hilfskreisseitigen Gleichrichters 66 derart gewählt, dass ein Nullstrom- bzw. Nullspannungsschalten der Schaltelemente 72, 73, 74, 75 des zwischenkreisseitigen Stromrichters 61 ermöglicht wird. Ein Stromfluss im Resonanzkreis, der von dem Kondensator C₃ und der primärseitigen Spule L1 gebildet wird, und damit eine Leistung, mit der der zwischenkreisseitige Stromrichter 61 betrieben wird, stellt sich hierbei in Abhängigkeit einer Spannungsdifferenz zwischen der Zwischenkreisspannung U_{ZK} und einem Spannungsabfall über einem Stützkondensator des hilfskreisseitigen Gleichrichters 66, der in Fig. 2 durch die Reihenschaltung des ersten und des zweiten Kondensators C₁, C₂ gebildet wird, ein. Eine Rückspeisefähigkeit von elektrischer Energie aus dem Hilfskreis zum Zwischenkreis ZK ist nicht notwendig, daher können, wie in Fig. 2 dargestellt, Dioden D5, D6 zur Realisierung des hilfskreisseitigen Gleichrichters 66 verwendet werden.

In Fig. 3 ist die in Fig. 2 dargestellte Schaltungsanordnung 60 mit einem Energiefluss in der ersten Energieflussrichtung E1 und einem weiteren Energiefluss mit einer zweiten Energieflussrichtung E2 in einer zweiten Betriebsweise dargestellt. Hierbei fließt Energie vom Zwischenkreis ZK zur Speichereinrichtung 63, was durch die zweite Energieflussrichtung E2 dargestellt ist. Hierbei kann die Speichereinrichtung 63 aus dem Zwischenkreis ZK aufgeladen werden. Insbesondere wird elektrische Energie aus dem Zwischenkreiskondensator C_{ZK} entnommen und in die Speichereinrichtung 63 eingespeist. Der zweite Energiefluss tritt hierbei zusätzlich zum ersten Energiefluss auf. Es ist jedoch auch möglich, dass ausschließlich der zweite Energiefluss auftritt. Die transportierte elektrische Leistung wird hierbei mittels des speicherseitigen Stromrichters 64, insbesondere durch Steuerung der Schaltelemente 82, 83, 84, 85, geregelt. Hierzu kann der speicherseitige Stromrichter 64 als Vierquadrantensteller ausgebildet sein. Insbesondere kann eine stromprogrammierte Regelung eingesetzt werden. So können z.B. das erste Schaltelement 72 des ersten Schaltungszweigs 70 und das zweite Schaltelement 75 des zweiten Schaltungszweigs 71 des zwischenkreisseitigen Stromrichters 61 elektrisch leitend geschaltet werden, wobei die verbleibenden Schaltelemente 73, 74 elektrisch sperrend geschaltet sind. Gleichzeitig kann das erste Schaltelement 84 des zweiten Schaltungszweigs 81 des speicherseitigen Stromrichters 64 elektrisch leitend geschaltet werden. In diesem Fall fließt ein Strom durch den vorhergehend erläuterten zwischenkreisseitigen Resonanzzweig, wobei aufgrund der magnetischen Kopplung der primärseitigen Spule L1 und der ersten sekundärseitigen Spule L21 ein Strom durch die erste sekundärseitige Spule L21 ansteigt. Bei Erreichen eines vorbestimmten Grenzwertes, der z.B. von einer übergeordneten Regelung festgelegt werden kann, schaltet das erste Schaltelement 84 des zweiten Schaltungszweigs 81 des speicherseitigen Stromrichters 64 elektrisch sperrend. Nachfolgend kommutiert der Strom auf die zum zweiten Schaltelement 85 des zweiten Schaltungszweigs 81 antiparallel geschaltete Diode D10, wodurch dieser Strom zur Speichereinrichtung 63 fließt und diese auflädt. Anstatt des ersten Schaltelements 84 des zweiten Schaltungszweigs 81 kann auch das zweite Schaltelement 83 des ersten Schaltungszweigs 80 des speicherseitigen Stromrichters 64 elektrisch leitend geschaltet und nach Erreichen eines Stromgrenzwerts elektrisch sperrend geschaltet werden. Insbesondere kann somit ein Vorladen des Zwischenkreiskondensators ermöglicht werden, wodurch dieser an ein Traktionsnetz 10 (siehe Fig. 1) angeschlossen werden kann. Nachfolgend kommutiert der Strom auf die Diode D7 und fließt somit auch zur Speichereinrichtung 63.

Alternativ kann das zweite Schaltelement 73 des ersten Schaltungszweigs 70 und das erste Schaltelement 74 des zweiten Schaltungszweigs 71 des zwischenkreisseitigen Stromrichters 61 leitend geschaltet sein. In diesem Fall können, entsprechend den vorhergehenden Ausführungen, entweder das erste Schaltelement 82 des ersten Schaltungszweigs 80 oder das zweite Schaltelement 85 des zweiten Schaltungszweigs 81 des speicherseitigen Stromrichters 64 erst elektrisch leitend und nach Erreichen eines Stromgrenzwerts elektrisch sperrend geschaltet werden, um die Speichereinrichtung 63 zu laden.

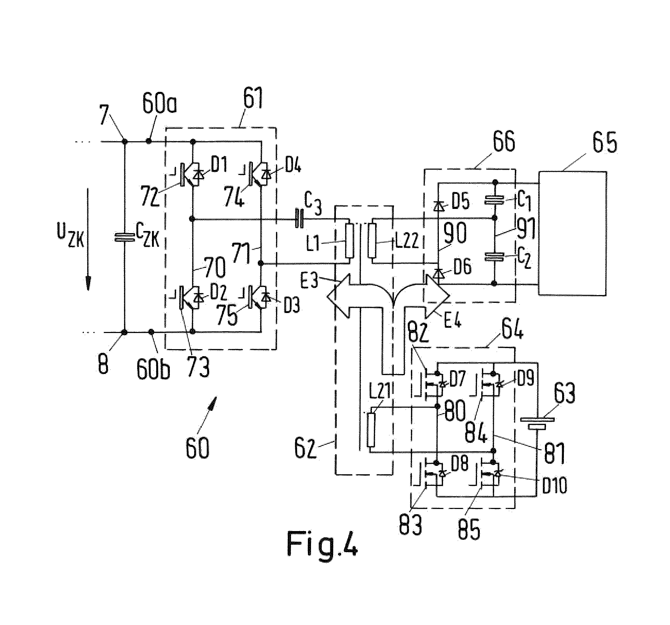

In Fig. 4 ist die in Fig. 2 dargestellte Schaltungsanordnung 60 mit Energieflussrichtungen E3, E4 in einer dritten Betriebsweise dargestellt. Hierbei fließt Energie in einer dritten Energieflussrichtung E3 von der Speichereinrichtung 63 zum Zwischenkreis ZK und mit einer vierten Energieflussrichtung E4 von der Speichereinrichtung 63 zum hilfskreisseitigen Wechselrichter 65. Die mit diesen Energieflüssen transportierte Leistung ist deutlich geringer als die in der ersten Betriebsweise transportierte Leistung und liegt typischerweise im Bereich einiger kW bis einiger 10 kW. Es ist möglich, dass die Kondensatoren C₁, C₂ des hilfskreisseitigen Gleichrichters 66 jeweils Kapazitäten aufweisen, die kein Nullstromschalten von Schaltelementen 82, 83, 84, 85 des speicherseitigen Stromrichters 64 ermöglichen. Somit arbeitet der z.B. als Vierquadrantensteller ausgebildete speicherseitige Stromrichter 64 hartschaltend. Die in Fig. 4 dargestellte Betriebsweise kann z.B. dann eingestellt werden, wenn der Zwischenkreiskondensator C_{ZK} komplett entladen ist oder einen vorbestimmten niedrigen Ladezustand aufweist und aus der Speichereinrichtung 63 aufgeladen werden soll. Insbesondere kann somit ein Vorladen des Zwischenkreiskondensators auf eine gewünschte Spannung ermöglicht werden, wodurch dieser an ein Traktionsnetz 10 (siehe Fig. 1) angeschlossen werden kann. Die Schaltelemente 72, 73, 74, 75 des zwischenkreisseitigen Stromrichters 61 können hierbei elektrisch sperrend geschaltet sein, wodurch ein Strom/Spannungsverlauf nur durch den von den Freilaufdioden D1, D2, D3, D4 gebildeten Diodengleichrichter eingestellt wird.

Beispielsweise können zu einem ersten Zeitpunkt das zweite Schaltelement 83 des ersten Schaltungszweigs 80 und das erste Schaltelement 84 des zweiten Schaltungszweigs 81 des speicherseitigen Stromrichters 64 elektrisch leitend geschaltet werden, wobei die verbleibenden Schaltelemente 82, 85 elektrisch sperrend geschaltet sind. Somit fließt ein Strom durch die erste sekundärseitige Spule L21. Aufgrund der magnetischen Kopplung der ersten sekundärseitigen Spule L21 mit der primärseitigen Spule L1 beginnt auch ein Strom im zwischenkreisseitigen Stromrichter 61 zu fließen, der durch den vorhergehend erläuterten Diodengleichrichter gleichgerichtet wird und in den Zwischenkreiskondensator C_{ZK} fließt und diesen somit auflädt. Aufgrund der magnetischen Kopplung der ersten sekundärseitigen Spule L21 mit der zweiten sekundärseitigen Spule L22 beginnt ein Strom auch im hilfskreisseitigen Gleichrichter 66 zu fließen, der durch die Dioden D5, D6 gleichgerichtet wird und z.B. den zweiten Kondensator C₂ auflädt.

Um eine Leistung, mit der die Speichereinrichtung 63 in dieser Betriebsart belastet wird, zu begrenzen, können die beiden elektrisch leitenden Schaltelemente 83, 84 des speicherseitigen Stromrichters 64 beim Erreichen eines vorbestimmten Grenzwertes elektrisch sperrend geschaltet werden. Zu diesem Zeitpunkt oder zu einem nach einer vorbestimmten Zeitdauer folgenden Zeitpunkt können nunmehr das erste Schaltelement 82 des ersten Schaltungszweigs 80 und das zweite Schaltelement 85 des zweiten Schaltungszweigs 81 des speicherseitigen Stromrichters 64 elektrisch leitend geschaltet werden. In diesem Fall fließt ein Strom durch die erste sekundärseitige Spule mit entgegengesetzter Richtung. Durch die magnetische Kopplung der ersten sekundärseitigen Spule L21 mit der primärseitigen Spule L1 und der zweiten sekundärseitigen Spule L22 wird jedoch auch in diesem Fall der Zwischenkreiskondensator C_{ZK} sowie der zweite Kondensator C₂ des hilfskreisseitigen Gleichrichters 66 geladen. Erreicht der Strom durch die erste sekundärseitige Spule L21 einen vorbestimmten Grenzwert, so können die zu diesem Zeitpunkt elektrisch leitende Schaltelemente 82, 85 des speicherseitigen Stromrichters 64 elektrisch sperrend geschaltet werden. Die vorbestimmten Grenzwerte des Stromes können hierbei z.B. von einer übergeordneten Regelung vorgegeben werden, wodurch Schaltzeitpunkte der Schaltelemente 82, 83, 84, 85 des speicherseitigen Stromrichters 64 festgelegt sind. Eine derartige Steuerung wird auch als stromprogrammierte Steuerung bezeichnet.

Hierdurch kann der Zwischenkreiskondensator C_{ZK} mittels der vorgeschlagenen Schaltungsanordnung 60 auf eine gewünschte Zwischenkreisspannung U_{ZK} vorgeladen werden. Gleichzeitig kann auch ein Hilfskreis mit elektrischer Energie versorgt werden. Insgesamt ergibt sich durch die vorgeschlagene Schaltungsanordnung, dass ein Bauraumvolumen, ein Gewicht sowie eine Anzahl verwendeter Bauteile reduziert werden können.

## Patentansprüche

1. Schaltungsanordnung zur Einstellung eines Ladezustands eines Kondensators, insbesondere eines Zwischenkreiskondensator (C_{ZK}) eines elektrisch antreibbaren Fahrzeugs, wobei die Schaltungsanordnung den Kondensator, einen Energiespeicher (63) und eine Stromrichterschaltung umfasst, wobei die Stromrichterschaltung derart ausgebildet ist, dass ein bidirektionalen Energiefluss zwischen dem Zwischenkreiskondensator und der Speichereinrichtung ermöglicht wird wobei die Schaltungsanordnung eine Anschlusseinrichtung für einen Hilfskreis umfasst, wobei der Kondensator und die Speichereinrichtung über die Stromrichterschaltung mit der Anschlusseinrichtung elektrisch verbunden sind, wobei die Stromrichterschaltung derart ausgebildet ist, dass elektrische Energie vom Zwischenkreiskondensator zur Anschlusseinrichtung und/oder elektrische Energie von der Speichereinrichtung zur Anschlusseinrichtung transportierbar ist,
wobei die Schaltungsanordnung (60) den Kondensator, einen zwischenkreisseitigen Stromrichter (61) und einen Transformator (62) umfasst, wobei eine Gleichspannungsseite des zwischenkreisseitigen Stromrichters (61) mit dem Kondensator und eine Wechselspannungsseite des zwischenkreisseitigen Stromrichters (61) mit einer primärseitigen Spule (L1) des Transformators (62) elektrisch verbunden ist, wobei die Schaltungsanordnung (60) die Anschlusseinrichtung für den Hilfskreis umfasst, wobei die Anschlusseinrichtung mit einer sekundärseitigen Spule (L22) des Transformators (62) verbunden ist,
**dadurch gekennzeichnet, dass**
hilfskreisseitig mindestens ein kapazitives Element angeordnet ist, wobei eine Kapazität des kapazitiven Elements in Abhängigkeit der Streuinduktivitäten derart gewählt ist, dass ein Nullspannungs- und/oder Nullstromschalten von Schaltelementen (72, 73, 74, 75) des zwischenkreisseitigen Stromrichters (61) durchführbar ist.

2. Schaltungsanordnung nach Anspruch 1, **dadurch gekennzeichnet, dass** die Schaltungsanordnung (60) den Energiespeicher (63) und einen speicherseitigen Stromrichter (64) umfasst, wobei eine Gleichspannungsseite des speicherseitigen Stromrichters (64) mit der Speichereinrichtung (63) und eine Wechselspannungsseite des speicherseitigen Stromrichters (64) mit einer ersten sekundärseitigen Spule (L21) des Transformators (62) elektrisch verbunden ist, wobei die Anschlusseinrichtung mit einer weiteren sekundärseitigen Spule (L22) des Transformators (62) verbunden ist.

3. Schaltungsanordnung nach Anspruch 2, **dadurch gekennzeichnet, dass** der zwischenkreisseitige Stromrichter (61) und/oder der speicherseitige Stromrichter (64) ein aktiver Stromrichter ist/sind.

4. Schaltungsanordnung nach einem der Ansprüche 2 bis 3, **dadurch gekennzeichnet, dass** eine Streuinduktivität zwischen der primärseitigen Spule (L1) und der ersten sekundärseitigen Spule (L21) größer ist als eine Streuinduktivität zwischen der primärseitigen Spule (L1) und der weiteren sekundärseitigen Spule (L22).

5. Schaltungsanordnung nach einem der Ansprüche 2 bis 4, **dadurch gekennzeichnet, dass** ein Übersetzungsverhältnis zwischen der primärseitigen Spule (L1) und der ersten sekundärseitigen Spule (L21) derart gewählt ist, dass eine transformierte maximale Zwischenkreisspannung kleiner ist als eine maximal zulässige Betriebsspannung der Speichereinrichtung (63).

6. Schaltungsanordnung nach einem der Ansprüche 2 bis 5, **dadurch gekennzeichnet, dass** ein Übersetzungsverhältnis zwischen der primärseitigen Spule (L1) und der weiteren sekundärseitigen Spule (L22) entsprechend einem Verhältnis einer maximalen Zwischenkreisspannung zu einer Betriebsspannung der Anschlusseinrichtung für den Hilfskreis gewählt ist.

7. Verfahren zum Betreiben einer Schaltungsanordnung (60) nach einem der Ansprüche 1 bis 6, wobei der speicherseitige Stromrichter (64) als Wechselrichter und der zwischenkreisseitige Stromrichter (61) als Gleichrichter betrieben wird oder der speicherseitige Stromrichter (64) als Gleichrichter und der zwischenkreisseitige Stromrichter (61) als Wechselrichter betrieben wird.

8. Verfahren zum Betreiben einer Schaltungsanordnung (60) nach einem der Ansprüche 1 bis 6, wobei der zwischenkreisseitige Stromrichter (61) als Wechselrichter betrieben wird und der speicherseitige Stromrichter (64) sperrend geschaltet ist.

9. Verfahren zum Betreiben einer Schaltungsanordnung (60) nach einem der Ansprüche 1 bis 6, **dadurch gekennzeichnet, dass** der speicherseitige Stromrichter (64) als Wechselrichter betrieben wird und der zwischenkreisseitige Stromrichter (61) sperrend geschaltet ist.
